# EUROPEAN PATENT APPLICATION

(11) **EP 1 713 183 A1**
(43) Date of publication of application: **18.10.2006**
(21) Application number: 05709261.1
(22) Date of filing: 17.01.2005
(51) Int. Cl.: H04B 1/38

(54) **ELECTRONIC DEVICE AND RADIO COMMUNICATION TERMINAL**

(30) Priority: 19.01.2004 JP 2004010522; 06.08.2004 JP 2004230278
(71) Applicant: SEIKO EPSON CORPORATION, Shinjuku-ku, Tokyo 163-0811 (JP)
(72) Inventor: IKEDA, Masayuki, c/o Seiko Epson Corporation, Suwa-Shi, Nagano 3928502 (JP); IIDA, Izumi, c/o Seiko Epson Corporation, Suwa-Shi, Nagano 3928502 (JP); ITO, Norio, c/o Seiko Epson Corporation, Suwa-Shi, Nagano 3928502 (JP)
(74) Representative: HOFFMANN EITLE
(86) International application number: PCT/JP2005/000807
(87) International publication number: WO 2005/069497

(57) **Abstract**

An electronic device is provided wherein a unit for converting a transmission signal to an electromagnetic wave signal and a unit for receiving the electromagnetic wave signal and restoring the transmission signal are disposed in the same casing, and high-speed large-capacity transfer data are transferred wirelessly.

## Description

### Technical Field

The present invention relates to an electronic device and a wireless communication terminal housing an element requiring high-speed data transfer, such as a display element and an image shooting element.

### Background Art

In recent years, improvements in the functions of mobile telephones, laptop computers and digital cameras have been remarkable. There has been the demand to increase the definition and resolution of display elements and image shooting elements housed therein, and these are becoming increasingly complex. Particularly with respect to mobile telephones, there has been the demand to increase their sophistication by internally disposing camera functions and increasing the size of the display screen, to make them more compact and lightweight, and to reduce their power consumption. With respect also to the casing structure of mobile telephones, foldable types called the clamshell type and the flip type have become the main current.

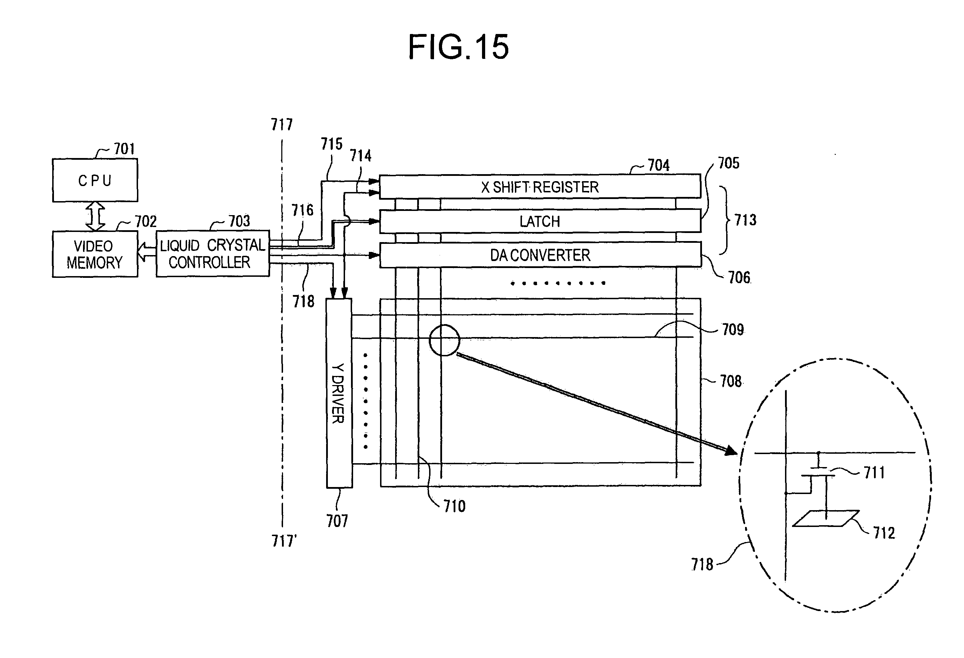

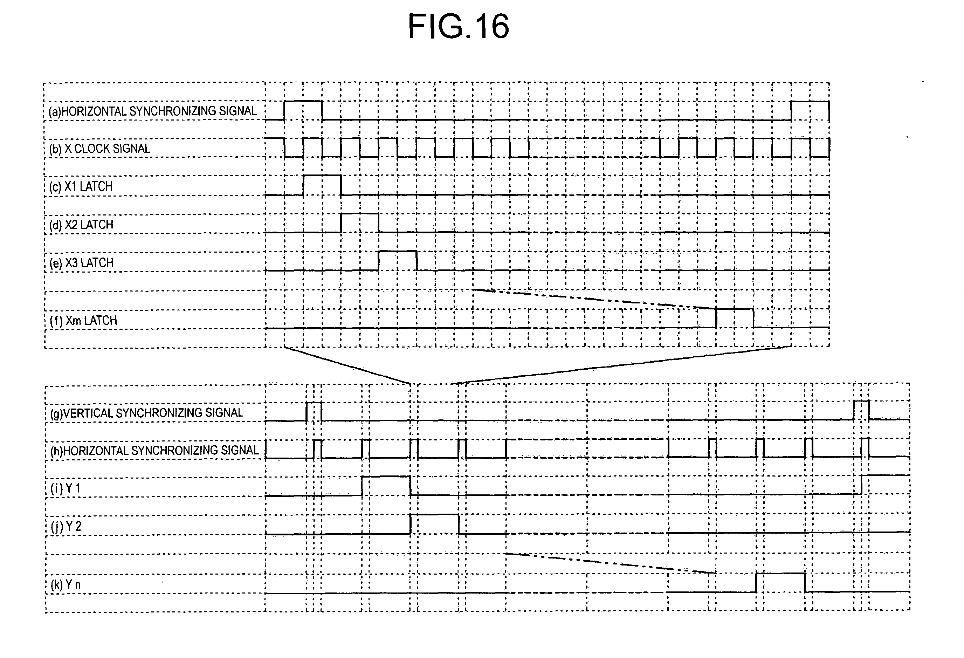

FIG. 15 is a block diagram showing a typical configuration of an electronic device using an active matrix type liquid crystal display as the display element, and FIG. 16 is a time chart thereof.

As shown in FIG. 15, a CPU 701 generates image data to be displayed in a liquid crystal display 708 by extension or calculation from JPEG and MPEG compressed images and moving image data. And the CPU 701 generates image date to be displayed, and writes the image data to a video memory 702. A liquid crystal controller 703 generates various timings necessary for liquid crystal display, i.e., an X clock signal 715 and a horizontal synchronizing signal 714 of an X driver 713, a vertical synchronizing signal 718 of an Y driver 707, reads the image data from the video memory 702 in accordance with the order in which the data are to be displayed, and transmits the image data to drivers (X driver 713 and Y driver 707) of a liquid crystal display 708. Here, when the pixels of the liquid crystal display 708 are configured by n rows and m columns, the X driver 713 is configured by m levels of shift registers 704, m words of latches 705, and m number of DA converters 706.

When the liquid crystal controller 703 reads the first pixel of the display frame, it generates the vertical synchronizing signal 718 and transmits it to the Y driver 707. At the same time, the liquid crystal controller 703 reads, from the video memory 702, the data displayed on the pixel of the first row and the first column of the liquid crystal display 708, and transmits this as a display data signal 716 to a data terminal of the latch 705.

As shown in FIG. 16, the X shift register 704 reads, in synchronization with the X clock signal 715, the horizontal synchronizing signal 714 that the liquid crystal controller 703 generates, and generates an X1 latch signal (FIG. 16(c)) for latching the image data of the first column. The data displayed on the pixel of the first row and first column are latched by this signal to the first column of the latch 705. Next, the liquid crystal controller 703 reads, from the video memory 702, the data to be displayed in the next pixel, and outputs the data to the latch 705. The X shift register 704 of the X driver 713 shifts the horizontal synchronizing signal 714 by one, generates an X2 latch signal (FIG. 16(d)) for latching the image data of the second column, and latches the image data of the first row and second column in the latch 705.

Thereafter, the X shift register 704 shifts the horizontal synchronizing signal 714 sequentially, latches sequentially the data displayed in the first row in the latch 705. When the latch 705 finishes saving the data of the first row, the next horizontal synchronizing signal 714 (FIGS. 16(a) and 16(h); note that in FIG. 16, the time scales of the horizontal axis change between (a) to (f) and (g) to (k) ; for that reason, with respect to the horizontal synchronizing signals that are the same signal, (h) is redisplayed in addition to (a)) is outputted, and the DA converter 706 DA-converts the data retained in the latch 705 and outputs the data to the Xi (1<=i<=m) number of a column electrode 710. At the same time, the Y driver 707 outputs a selection signal to a row electrode 709 of the first row.

Thereafter, the Y driver 707 similarly sequentially shifts the selection signal outputted to the Yj number (1<=j<=n) of a row electrode 709 each time the horizontal synchronizing signal 714 appears.

Inside the dot and dash line 718 of FIG. 15 is a diagram where one pixel portion arranged in a matrix in the liquid crystal display 708 has been enlarged. When the Yj number of the row electrode 709 is selected, an active switch element 711 transmits, to a pixel electrode 712, the output of the DA converter 706 outputted to the Xi number of the column electrode 710. It should be noted that one DA converter 706 may be disposed at the liquid crystal controller 703 side to transmit the display data signal 716 with an analog signal. In this case, the latch 705 serves as an analog sample-and-hold circuit. This method can reduce the number of DA converters 706, and although may have been conventionally used, it suffices as long as the voltage value eventually applied to the pixel electrodes 712 becomes a predetermined value even with a DA converter 706, and a digital circuit such as a pulse width modulation circuit can be used, and the analog sample-and-hold circuit becomes unnecessary. Thus, in accompaniment with the increase in the density of LSI, the method described here is becoming the main current.

However, in this method, because the display data signal 716 is sent by digital signals, the number of signal lines becomes extremely large. For example, a total of 24 signal lines (8 bits × the three primary colors) become necessary.

The period of time from after the display data signal 716 of the right end of the row has been outputted from the liquid crystal controller 703 to until the display data signal 716 of the left end of the next row is outputted, or from when the display data signal 716 of the bottommost row of the screen has been outputted to until the display data signal 716 of the first row of the next frame is outputted, is called a (horizontal, vertical) blanking period or a flyback period. With CRT, because there is necessary to go and return the electronic beam, it cannot be made 0, but with a liquid crystal display, because a pixel is selected by an active switch element 711, it may be 0. FIG. 16 shows the case of a horizontal flyback period of 1 pixel portion and a vertical flyback period of 1 row.

In the electronic device using an image shooting element such as a digital camera, the orientation with which the display date signal 716 is transmitted becomes exactly the opposite of the case using the liquid crystal display 708, and the same circuit configuration is used.

With respect to electronic devices housing such the liquid crystal display 708 and image shooting element, there has been the demand to increase the size of the display, to increase the definition, and also make the device more compact and lightweight. For this reason, there are many instances where plural mounting substrates that mount the electronic device of FIG. 15 are used, and in this case, there are many instances where the mounting substrates are separated by the dot and dash line 717-717' of FIG. 15.

Consequently, the connection wire between the CPU 701 and the liquid crystal display 708 becomes long. Also, even in a case where an image shooting element is disposed in the configuration of FIG. 15, the orientation with which the display data signal 716 is transmitted becomes exactly the opposite of the case using the liquid crystal display 708, and the same circuit configuration is used. Thus, the connection wire between the CPU 701 and the image shooting element becomes long.

Also, in accompaniment with the increase in the resolution of the liquid crystal display 708 and the image shooting element, the signal frequencies of those lines become high, and connection with the CPU 701 becomes difficult. In particular, a clamshell type structure takes a structure where both are connected by a narrow hinge portion. For this reason, in accompaniment with the increase in the resolution of the liquid crystal display 708 and the image shooting element, the amount of data exchanged between the substrates when the mounting substrates are divided the dot and dash line 717-717' of FIG. 15 becomes large, and high-speed transfer technology becomes necessary. In order to solve this problem, as a high-speed data transmission method, for example, it has been proposed to use LVDS (Low Voltage Differential Signaling) for the connection of the liquid crystal display 708 and the image shooting element ((Japanese Patent Publication No. 3086456 (column 44) and Japanese Patent Publication No. 3330359 (column 46)). In Japanese Patent Publication No. 3349426 and Japanese Patent Publication No. 3349490, new methods have been proposed because a sufficient solution cannot be obtained with this method.

### Disclosure of the Invention

However, recent developments in making the liquid crystal display 708 larger have been remarkable, and sufficient performance cannot be obtained with these technologies. In order to obtain sufficient noise resistance characteristics (interference-resistance, interference-giving), there has been the demand for meticulous designs and adjustments. Also, in LVDS, because the signal level is small, there have been the problems that analog signals are inevitably handled as digital IC and power consumption has become large.

Also, in order to precisely transmit signals, matched impedance terminals are necessary, but because the number of lines that the impedance terminals need is large and the transmission impedance is about 100 Ohms at best, there has also been the problem that the power consumed by these terminal resistors has become large to the extent that it is unacceptable.

Moreover, when the mounting substrates are divided by the dot and dash line 717-717' of FIG. 15, it is necessary to transmit a large amount of data at a high speed through a line pulled around by long wiring. For this reason, the radiation electromagnetic field from this line increases, which leads to electromagnetic interference with respect to other electronic devices or the host device. In signal transmission resulting from a conventional signal line, the amplitude level at the receiving end is stipulated, and even if sufficient quality is ensured at the receiving end, the amplitude level of the signal cannot be lowered. Namely, EMI (Electro Magnetic Interference) measures become difficult, and as a result, this triggers restrictions on the device design and cost increases. Also, at the transmission side, because the stray capacitance of the line also becomes driven at the same time in addition to the charge of the receiving end, excessive energy is required for signal transmission. Namely, the result is that power consumption is increased.

Also, increasing the number of wirings in accompaniment with increasing the speed of data transfer requires physical space for the wirings, which naturally leads to large restrictions with respect to the design of the device.

Particularly with respect to a clamshell type structure, when wiring is passed through a movable portion such as a hinge portion, the characteristic impedance changes due to the folded state of the movable portion. Thus, impedance mismatching arises due to this situation, and signal deterioration is caused by reflection at the folded portion. For this reason, there have been the problems that the speed of the data to be transmitted is restricted, and the mounting method and disposition of parts are restricted.

Also, in order to accommodate increases in the resolution and speed of the liquid crystal display 708 and the image shooting element, the number of signals exchanged via the hinge portion becomes several tens of signals, and wiring on the mounting substrates cannot be used in the hinge portion, whereby flexible substrates are connected via a connector. Connection with flexible substrates and connectors has the drawback that the cost is high and the connection reliability is low.

Thus, it is an object of the present invention to realize an electronic device and a wireless communication terminal that improve, with a non-conventional, completely new method, upon the methods of high-speed transmission of data having various problems and restrictions as described above, eliminate these conventional defects and restrictions, and are inexpensive and have high reliability.

In an electronic device of the invention, a first portion, which is disposed with an electromagnetic wave conversion unit that converts a transmission signal to an electromagnetic wave signal and a transmission unit that wirelessly transmits the electromagnetic wave signal, and a second portion, which is disposed with a reception unit that receives the electromagnetic wave signal and an electromagnetic wave restoration unit that restores the received electromagnetic wave signal to the transmission signal, are housed in the same casing.

According to this configuration, the transmission and reception of signals can be made wireless with electromagnetic waves in the casing, because the signals propagate and are transmitted through space, even in an instance where a moving portion is housed in the casing, wiring using flexible boards and connectors is not necessary, and cost increases and reliability problems resulting from these are eliminated. The problem of power consumption rising in accompaniment with an increase in the data transmission speed and terminals for impedance matching can also be avoided. Also, the pulling of wiring and restrictions on part disposition are eliminated, so that the design and ease-of-use of the electronic device can be improved. Also, because the electromagnetic waves used for the signal transmission are conducted at a close distance within the same device, it suffices as long as communication within this distance can be ensured, and because the strength of the radiation electromagnetic waves can be lowered to a limit, measures in order to improve EMI characteristics become easy.

An electronic device of the invention comprises a first casing unit in which is housed a first portion in which are disposed an electromagnetic wave conversion unit that converts a transmission signal to an electromagnetic wave signal and a transmission unit that wirelessly transmits the electromagnetic wave signal, a second casing unit in which is housed a second portion in which are disposed a reception unit that receives the electromagnetic wave signal and an electromagnetic wave restoration unit that restores the received electromagnetic wave signal to the transmission signal, and a coupler unit that couples together the first casing unit and the second casing unit so that the positional relationship between the first casing unit and the second casing unit can be changed.

According to this configuration, the transmission and reception of signals in the casing can be made wireless with electromagnetic waves, and the signals propagate and are transmitted through space. For this reason, it is not necessary to conduct wiring using flexible boards and connectors between the first casing unit and the second casing unit, and cost increases and reliability problems resulting from these are eliminated. The problem of power consumption rising in accompaniment with an increase in the data transmission speed and terminals for impedance matching can also be avoided. Also, the pulling of wiring and restrictions on part disposition are eliminated, so that the design and ease-of-use of the electronic device can be improved. Also, because the electromagnetic waves used for the signal transmission are conducted at a close distance, it suffices as long as communication within this distance can be ensured, and because the strength of the radiation electromagnetic waves can be lowered to a limit, measures in order to improve EMI characteristics become easy.

The electromagnetic wave signal conversion unit of the electronic device of the invention comprises at least a carrier wave generation unit that generates a carrier wave pulse train and a multiplier circuit that multiplies the carrier wave pulse train with the transmission signal.

According to this configuration, the modulation can be realized by using the exclusive OR circuit and the signal to be transmitted can be converted to electromagnetic waves with little hardware costs.

The electromagnetic wave restoration unit of the electronic device of the invention comprises at least a multiplier circuit that multiplies the carrier wave pulse train with the received electromagnetic wave signal to restore the transmission signal.

According to this configuration, the modulation can be realized by using the exclusive OR circuit, the electromagnetic wave signal can be received and the transmitted data can be restored with little hardware costs.

Also, the electromagnetic wave conversion unit of the electronic device of the invention is disposed with at least a carrier wave generation unit that generates a carrier wave pulse train and a modulation unit that phase-modulates, with the transmission signal, the carrier wave generated by the carrier wave generation unit.

Moreover, the electromagnetic wave restoration unit comprises at least a multiplier circuit that multiplies the carrier wave pulse train with the received electromagnetic wave signal to restore the transmission signal.

According to this configuration, the signal to be transmitted can be converted to electromagnetic waves with little hardware costs, the exclusive band necessary for communication can be held, and the interference-giving performance can be improved.

Also, the electromagnetic wave signal conversion unit of the electronic device of the invention is disposed with a diffusion modulation unit that code-multiplexes and diffusion-modulates the transmission signal.

According to this configuration, plural signals can be multiplexed and sent free from serial transmission, diffusion gains can be accumulated, and a robust system with good real-time characteristics can be constructed.

Moreover, the electromagnetic wave conversion means of the electronic device of the invention is disposed with a UWB modulation unit that UWB-modulates the transmission signal.

According to this configuration, even with respect to strong electromagnetic field environmentalization of an electronic device where electromagnetic wave generation is the fundamental function such as a mobile telephone conducting communication with radio waves, high-speed high-reliability data transmission becomes possible. If it is UWB communication, the stipulation of the maximum radiation electromagnetic field allowed by law is alleviated, and the design of the reception side becomes easier.

The first portion of the electronic device of the invention is disposed with a storage unit that stores the transmission signal and a control unit that reads and outputs the transmission signal stored in the storage unit, the second portion is disposed with a display unit, and the display unit displays the transmission signal read and outputted by the control unit.

According to this configuration, because the exchange of signals between the display and the control unit of the display is made wireless, wiring between the display and the control unit becomes unnecessary, and various problems that have come to light in accompaniment with increasing the size of the display can be avoided. Namely, there are effects in that the invention can be easily packaged even with a clamshell structure casing, wirings such as flexible boards and connectors are not necessary, cost increases and reliability problems resulting from these are eliminated, and it is possible for the invention to accommodate a high transmission speed.

The first portion of the electronic device of the invention is disposed with an image shooting element, and image data shot by the image shooting element are included in the transmission signal.

According to this configuration, because the exchange of signals between the image shooting element and the host side using image data obtained by the image shooting element is made wireless, wiring of their between becomes unnecessary, and various problems that have come to light in accompaniment with increasing the size of the image shooting element can be avoided. Namely, there are effects in that the invention can be easily packaged even with a clamshell structure casing, wirings such as flexible boards and connectors are not necessary, cost increases and reliability problems resulting from these are eliminated, and it is possible for the invention to accommodate a high transmission speed. Particularly with respect to a camera, optical systems and electronic parts must be packaged in the same casing and there are many restrictions on the electronic parts mounting, but according to the above-described configuration of the invention, these restrictions can be alleviated.

A wireless communication terminal of the invention comprises a first casing unit, a second casing unit coupled to the first casing unit, a coupler portion that couples together the first casing unit and the second casing unit so that the position relation between the first casing unit and the second casing unit can be changed, an external wireless communication-use antenna disposed at the first casing unit or the second casing unit, an external wireless communication control unit that is disposed in the first casing unit and mainly controls external wireless communication conducted via the external wireless communication-use antenna, a display unit disposed in the second casing unit, a first internal wireless communication-use antenna disposed at the first casing unit, a second internal wireless communication-use antenna disposed at the second casing unit, a first internal wireless communication control unit that is disposed in the first casing unit and controls internal wireless communication conducted via the first internal wireless communication-use antenna, and a second internal wireless communication control unit that is disposed in the second casing unit and controls internal wireless communication conducted via the second internal wireless communication-use antenna.

According to this configuration, even in an instance where a clamshell structure is adopted for the wireless communication terminal, it becomes possible to stably conduct wireless data transmission between the casings of the wireless communication terminal. For this reason, even in an instance where the amount of data exchanged between the casings has increased in correspondence to an increase in the resolution of the display unit disposed in the wireless communication terminal, it becomes possible to prevent the structure of the coupler unit from becoming complex, and it becomes possible to prevent the packaging process from becoming complicated. As a result, it becomes possible to make the wireless communication terminal more compact, thin and reliable while preventing cost increases, and the screen of the wireless communication terminal can be enlarged and the wireless communication terminal can be made more multifunctional without hindering the portability of the wireless communication terminal.

### Brief Description of the Drawings

FIG. 1 is a perspective diagram showing a clamshell type mobile telephone, to which a wireless communication control method of the invention has been applied, in an opened state.
FIG. 2 is a perspective diagram showing the clamshell type mobile telephone, to which the wireless communication control method of the invention has been applied, in a closed state.
FIG. 3 is a perspective diagram showing the exterior of a rotating type mobile telephone to which the wireless communication control method of the invention has been applied.
FIG. 4 is a cross-sectional diagram showing the relevant portions of an embodiment of the invention.
FIG. 5 is a cross-sectional diagram showing the relevant portions of a liquid crystal projector of an embodiment of an electronic device according to the invention.
FIG. 6 is a plan diagram showing in detail a light bulb of FIG. 5.
FIG. 7 is a block diagram showing the relevant portions of an embodiment of the invention.
FIG. 8 is a block diagram showing yet another embodiment of the invention.
FIG. 9 is a block diagram showing the relevant portions of yet another embodiment of the invention.
FIG. 10 is a block diagram showing modulation/demodulation portions of other embodiments of the invention.
FIG. 12 is a time diagram describing the operation of the embodiments of the invention.
FIG. 13 is a block diagram showing yet another embodiment of the invention.
FIG. 14 is a block diagram showing yet another embodiment of the invention.
FIG. 15 is a block diagram describing an electronic device having a conventional liquid crystal display.
FIG. 16 is a time diagram describing the operation of the electronic device having the conventional liquid crystal display.

### [Best Mode for Carrying Out the Invention]

Hereinafter, Embodiments of the invention will be described below using the drawings.

### [Embodiment 1]

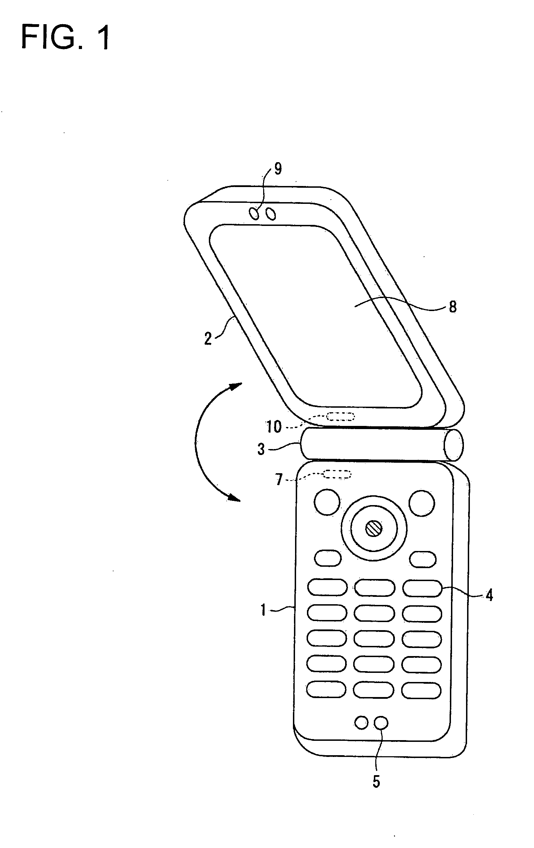

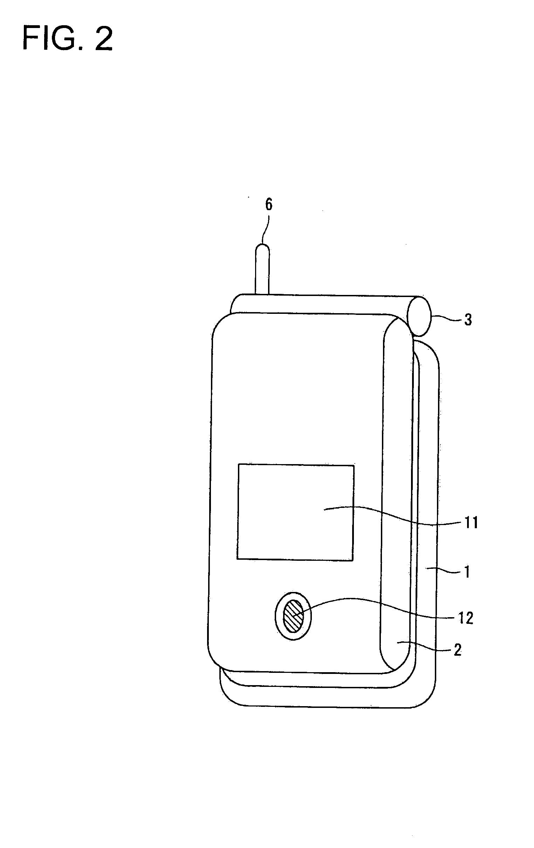

FIG. 1 is a perspective diagram showing a clamshell type mobile telephone, to which a wireless communication control method of the invention has been applied, in an opened state. FIG. 2 is a perspective diagram showing the clamshell type mobile telephone, to which the wireless communication control method of the invention has been applied, in a closed state.

In FIGS. 1 and 2, operation buttons 4 are disposed on a surface of a first casing unit 1, a microphone 5 is disposed in a lower end of the first casing unit 1, and an external wireless communication-use antenna 6 is attached to an upper end of the first casing unit 1. Also, a display 8 is disposed on a surface of a second casing unit 2, and a speaker 9 is disposed in an upper end of the second casing unit 2. Also, a display 11 and an image shooting element 12 are disposed in a rear surface of the second casing unit 2. For the displays 8 and 11, for example a liquid crystal panel, an organic EL panel or a plasma display panel can be used. Also, a CCD or a CMOS sensor can be used for the image shooting element 12. Internal wireless communication-use antennas 7 and 10 that conduct internal wireless communication between the first casing unit 1 and the second casing unit 2 are respectively disposed in the first casing unit 1 and the second casing unit 2.

Additionally, the first casing unit 1 and the second casing unit 2 are coupled together via a hinge 3. By pivoting the second casing unit 2 around the hinge 3, the second casing unit 2 can be folded onto the first casing unit 1. Additionally, by closing the second casing unit 2 onto the first casing unit 1, the operation buttons 4 can be protected by the second casing unit 2, so that the operation buttons 4 can be prevented from being mistakenly operated when the user walks around with the mobile telephone. Also, by opening the second casing unit 2 from the first casing unit 1, the user can operate the operation buttons 4 while viewing the display 8, can talk on the mobile telephone while using the speaker 9 and the microphone 5, and can take pictures while operating the operation buttons 4.

Here, by using a clamshell structure, the display 8 can be disposed across substantially an entire surface of the second casing unit 2, the size of the display 8 can be enlarged without hindering the portability of the mobile telephone, and the visibility can be improved.

Also, by disposing the internal wireless communication-use antennas 7 and 10 respectively in the first casing unit 1 and the second casing unit 2, data transmission between the first casing unit 1 and the second casing unit 2 can be conducted by internal wireless communication using the internal wireless communication-use antennas 7 and 10. For example, image data and audio data received by the first casing unit 1 via the external wireless communication-use antenna 6 can be sent to the second casing unit 2 by internal wireless communication using the internal wireless communication-use antennas 7 and 10, so that images can displayed on the display 8 and audio can be outputted from the speaker 9. Also, "shot image data" shot with the image shooting element 12 can be sent from the second casing unit 2 to the first casing unit 1 by internal wireless communication using the internal wireless communication-use antennas 7 and 10, so that the shot image data can be transmitted to the outside via the external wireless communication-use antenna 6.

Thus, it becomes unnecessary to conduct data transmission between the first casing unit 1 and the second casing unit 2 with a wire, and it becomes unnecessary to pass a flexible wiring board with a high pin count through the hinge 3. For this reason, it becomes possible to prevent the structure of the hinge 3 from becoming complex, it becomes possible to prevent the mounting process from becoming complicated, it becomes possible to make the mobile telephone more compact, lightweight and reliable while preventing the cost of the mobile telephone from increasing, the screen of the mobile telephone can be enlarged and the mobile telephone can be made more multifunctional without hindering the portability of the mobile telephone.

It should be noted that, although the external wireless communication-use antenna 6 is attached to the first casing unit 1, it may also be attached to the second casing unit 2. In this case, the external wireless communication-use antenna 6 is not blocked by the second casing unit 2 at the time of use, so that communication with good efficiency can be expected. In this case, power is supplied, by a coaxial cable, to the external wireless communication-use antenna 6 from a mobile telephone communication controller disposed in the first casing unit 1.

### [Embodiment 2]

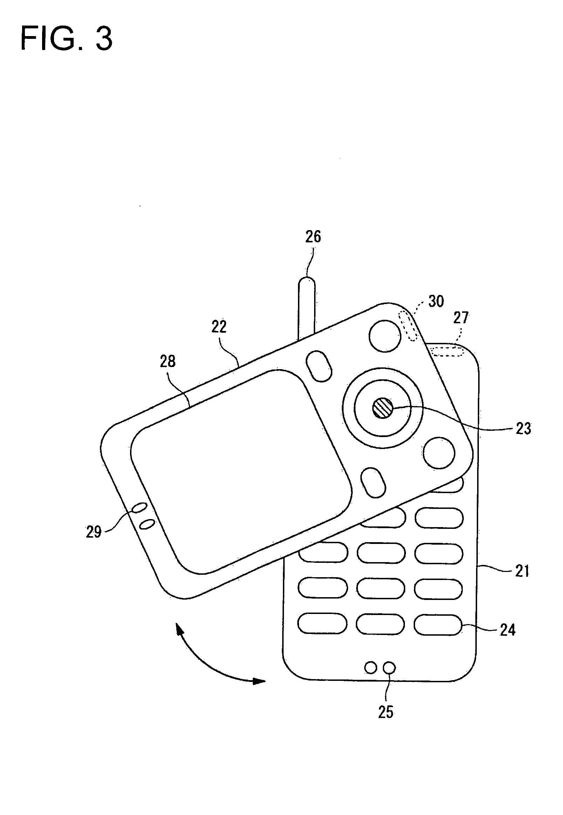

FIG. 3 is a perspective diagram showing the exterior of a rotating type mobile telephone to which the wireless communication control method of the invention has been applied.

In FIG. 3, operation buttons 24 are disposed on a surface of a first casing unit 21, a microphone 25 is disposed in a lower end of the first casing unit 21, and an external wireless communication-use antenna 26 is attached to an upper end of the first casing unit 21. Also, a display 28 is disposed on a surface of a second casing unit 22, and a speaker 29 is disposed in an upper end of the second casing unit 22. Also, internal wireless communication-use antennas 27 and 30 that conduct internal wireless communication between the first casing unit 21 and the second casing unit 22 are respectively disposed in the first casing unit 21 and the second casing unit 22.

Additionally, the first casing unit 21 and the second casing unit 22 are coupled together via a hinge 23. By horizontally rotating the second casing unit 22 around the hinge 23, the second casing unit 22 can be superposed onto the first casing unit 21, and the second casing unit 22 can be shifted from the first casing unit 21. Additionally, by superposing the second casing unit 22 onto the first casing unit 21, the operation buttons 24 can be protected by the second casing unit 22, so that the operation buttons 24 can be prevented from being mistakenly operated when the user walks around with the mobile telephone. Also, by horizontally rotating the second casing unit 22, the user can shift the second casing unit 22 from the first casing unit 21, can operate the operation buttons 24 while viewing the display 28, and can talk on the mobile telephone while using the speaker 29 and the microphone 25.

Here, by disposing the internal wireless communication-use antennas 27 and 30 respectively in the first casing unit 21 and the second casing unit 22, data transmission between the first casing unit 21 and the second casing unit 22 can be conducted by internal wireless communication using the internal wireless communication-use antennas 27 and 30. For example, image data and audio data received by the first casing unit 21 via the external wireless communication-use antenna 26 can be sent to the second casing unit 22 by internal wireless communication using the internal wireless communication-use antennas 27 and 30, so that images can displayed on the display 28 and audio can be outputted from the speaker 29.

Thus, it becomes unnecessary to pass a flexible wiring board with a high pin count through the hinge 23, it becomes possible to prevent the structure of the hinge 23 from becoming complex, and it becomes possible to prevent the mounting process from becoming complicated. For this reason, it becomes possible to make the mobile telephone more compact, lightweight and reliable while preventing the cost of the mobile telephone from increasing, the screen of the mobile telephone can be enlarged and the mobile telephone can be made more multifunctional without hindering the portability of the mobile telephone.

It should be noted that, although a mobile telephone was described as an example in the preceding embodiment, the invention can also be applied to, at least, a video camera, a PDA (Personal Digital Assistance) and a personal laptop computer.

### [Embodiment 3]

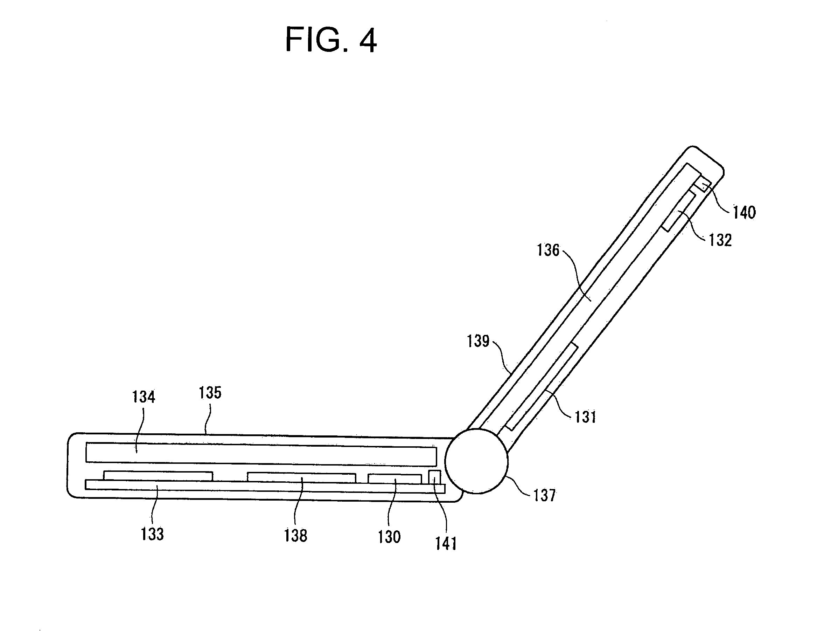

FIG. 4 is a cross-sectional diagram showing the relevant portions of an embodiment of another electronic device.

In FIG. 4, the electronic device is separated into a body portion 135 and a display portion 139, and these are integrated via a hinge 137. A body portion substrate 133 handles the control of the functions of the electronic device body. Various input/output devices, such as a keyboard and a display device, are connected to the electronic device. 134 is a keyboard serving as an input device, and 136 is a liquid crystal display serving as a display device. 138 is a liquid crystal controller that generates display data with the control of an electronic circuit on the body substrate 133. Here, a transmission antenna 141 and a reception antenna 140 for conducting the internal wireless communication between the body portion 135 and the display portion 139 are disposed on the electronic device.

Additionally, the display data that the liquid crystal controller 138 generates are sent to a modulator 130, modulated, converted to electromagnetic waves (radio waves) and propagated through space from a transmission antenna 141. Electromagnetic wave signals transmitted form the transmission antenna 141 are received by a reception antenna 140, demodulated to display data by a demodulator 132, sent to a liquid crystal driver 131 and displayed on the liquid crystal display 136.

The electromagnetic field emitted from the transmission antenna 141 is set so as to not exceed the limit established by law. The emission level allowed for radio stations not requiring a license is a far lower level than that of the EMI standard, but because the communication distance is extremely short, a communication path of sufficient quality can be ensured by appropriately setting the link budget.

By adopting this configuration, large quantities of data such as display data can be wirelessly transmitted, and the signals propagate through space and are not transmitted via signal lines necessary for high-speed data transmission, whereby it becomes unnecessary to use these signal lines, even in a case when the body portion 135 and the display portion 139 are integrated via the hinge 137, the conventional problems of connectors and hinge structures accompanying these can be eliminated. Namely, even in the case when the body portion 135 and the display portion 139 are integrated via the hinge 137, a generation of impedance mismatching arises due to the situation of a folded state of the hinge 137 can be avoided, a signal deterioration caused by reflection of the hinge 137 can be prevented, restrictions of the speed of the data to be transmitted can be eliminated, and restrictions of the mounting method and disposition of parts can be alleviated. Also, there is not necessary to be applied the connection with flexible boards and connector, and the connection reliability can be improved with cost decreases.

Also, in transmission resulting from conventional signal lines, it is necessary to ensure a signal amplitude that the logic level of the signals stipulates in order to properly transmit signals, charge and discharge of stray capacitance increases in accompaniment with increases in speed, and power consumption increases. Moreover, unwanted irradiation power emitted from the signal lines increases, and measures to counter interference with peripheral devices become difficult. In transmission resulting from signal lines, power consumption essentially cannot be reduced because the logic level is stipulated. Also, there has been no other method but remedies such as shield strengthening in order to reduce unwanted radiation.

According to the method of the present invention, because it suffices as long as a sufficient communication quality can be ensured with respect to a short distance within the same device, the irradiation power from the transmission antenna 141 can be lowered to about this value, and power consumption and EMI measures are essentially improved and become easy. Also, the method is released from restrictions such as an increase in power consumption and pulling of lines accompanying termination for impedance matching of communication lines. Because the communication distance in the wireless communication method is confined within the same casing of the same device, a method that is simpler than techniques used in conventional wireless communication devices can be used.

As shown in FIG. 4, the body portion 135 and the display portion 139 are integrated via the hinge 137, and the electronic device is housed within the same casing. It is difficult to transmit data in transmission lines in accompaniment with data that are to be transferred increasing in speed, but transmission by electromagnetic waves in space becomes easier. Together with the improvements in semiconductor device fabrication techniques of recent years, the incorporation of such radio frequency wireless transmission modems is possible at a low cost and has high practicality.

It should be noted that the signal transmission distance is a short distance, and that it is not necessary for all signals to be transmitted wirelessly. The efficiency is good when transmitting signals necessary for high-speed transmission and signals necessary for multiplexing and parallelization. It is also possible to transmit control signals that control modulation/demodulation and timing signals with wires.

### [Embodiment 4]

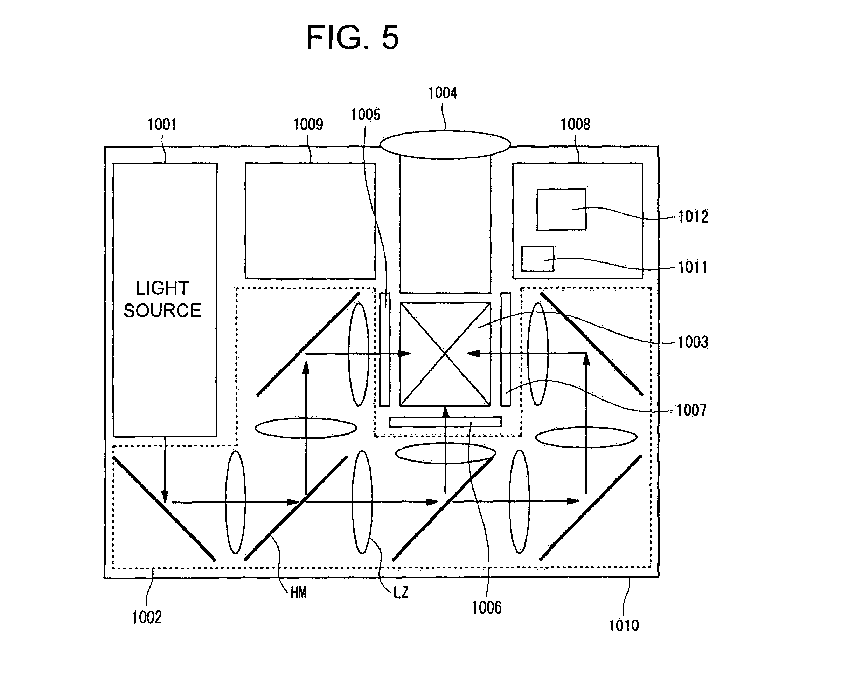

FIG. 5 is a diagram showing the relevant portions of a liquid crystal projector that is an embodiment of the electronic device according to the invention.

In FIG. 5, the projector includes optical system 1002, 1003 and 1004 that occupies a large portion of a casing 1010 of the projector. Namely, light (white light) emitted from a light source 1001 is separated into the three primary colors by an optical system 1002 (within the dotted line). Here, the optical system 1002 is configured mainly by half mirrors HM, optical filters and lenses LZ. After the light of each is modulated by a light bulb 1005, a light bulb 1006 and a light bulb 1007 resulting from liquid crystal, it is synthesized by an optical system 1003 configured by a prism, and then enlarged and projected by an optical system 1004. Circuits for controlling the light bulb 1005, the light bulb 1006 and the light bulb 1007 are disposed on respectively substrates 1008 and 1009. Here, a modulator 1012 and the transmission antenna 1011 are disposed on the substrates 1008, the modulator 1012 modulates display data signals for controlling the light bulbs, and the display signals modulated are emitted from a transmission antenna 1011 as electromagnetic waves.

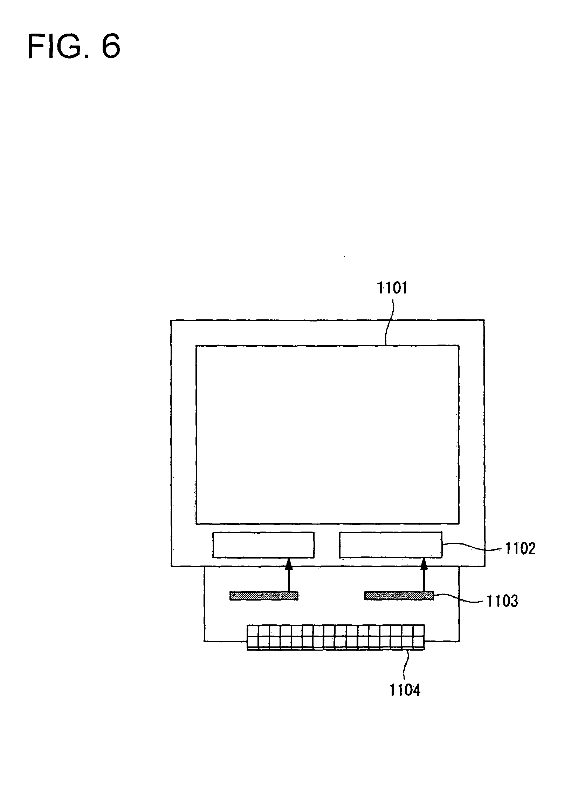

FIG. 6 is a diagram showing in detail the light bulb 1005, the light bulb 1006 or the light bulb 1007.

In FIG. 6, a light shutter 1101, a liquid crystal driver 1102, a reception antenna 1103 and a connector 1104 are disposed on the light bulb 1005, light bulb 1006 and light bulb 1007. Also, a liquid crystal driver 1102 (ordinarily configured by plural semiconductor integrated circuits) resulting from a semiconductor integrated circuit that drives a light shutter 1101 of FIG. 5 resulting from transmissive liquid crystal drives the light shutter 1101 after the display data signals transmitted from the transmission antenna 1011 are received by a reception antenna 1103 and demodulated. Also, power for driving the light shutter 1101 and the liquid crystal driver 1102 can be received via a connector 1104.

Here, the destination of the display data signals resulting from the transmitted electromagnetic waves is designated by a method resulting from code diffusion, a method using different electromagnetic wave modulation frequencies, or a method that determines and addresses time slots. By using such an addressing method, the electromagnetic wave signals transmitted from the transmission antenna 1011 are properly transmitted to a designated light bulb of the three light bulbs of 1005, 1006, 1007. The address designation may be per light bulb 1005, 1006, and 1007. Alternatively, as shown in FIG. 6, it is also possible for plural liquid crystal driver 1103 to be disposed for one light bulb 1005, 1006, 1007 and for an address to be designated with respect to each.

Conventionally, in a liquid crystal projector, the optical system 1002, 1003 and 1004 occupy a large portion of the casing area and it has been necessary to dispose wiring away from the optical path or dispose parts away from the optical path. Moreover, because heat emitted from the light source 1001 builds up within the casing 1010, measures to handle the heat of the wiring have also been necessary. According to the present invention, because the signals are transmitted through space by electromagnetic waves, conventional difficulties are remarkably alleviated become easy.

### [Embodiment 5]

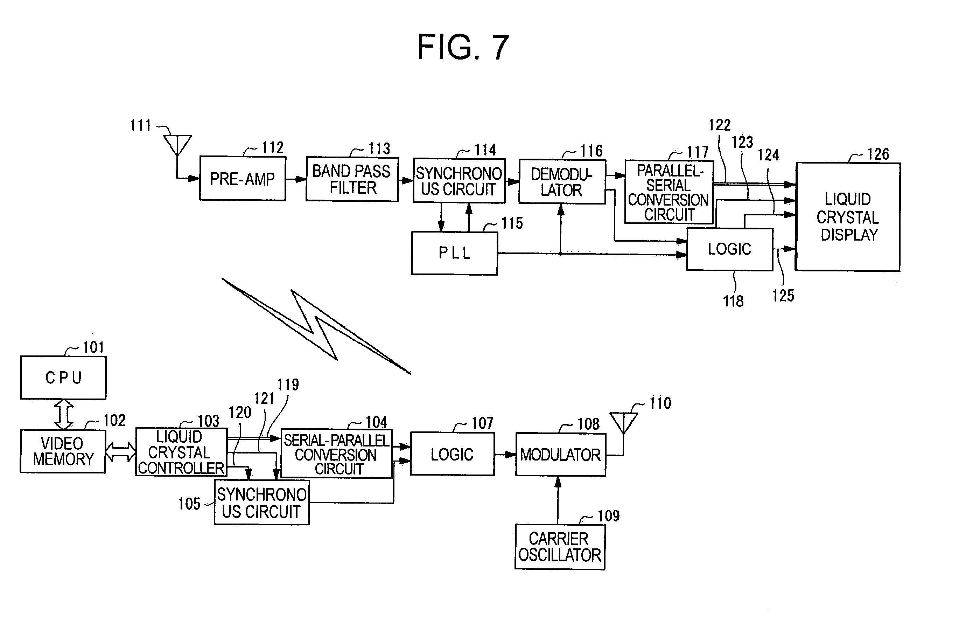

FIG. 7 is a block diagram showing the relevant portions of an embodiment of another electronic device.

In FIG. 7, a CPU 101 generates display data to be displayed by computation and records the data in a video memory 102. A liquid crystal controller 103 successively reads, from the video memory 102 in a predetermined order, display data 119 to be displayed on a display, and outputs the display data 119 together with a vertical synchronizing signal 121 and a horizontal synchronizing signal 120. The display data 119 are parallel-serial-converted by a serial-parallel conversion circuit 104 and transmitted to a logic circuit 107. A synchronous circuit 105 receives the horizontal synchronizing signal 120 and the vertical synchronizing signal 121 and generates a preamble for synchronization necessary for communication such as the timing for synchronous detection. The logic circuit 107 receives the signals from the serial-parallel conversion circuit 104 and the synchronous circuit 105 and generates a packet for wireless transmission, and the packet is modulated by a modulator 108 by a carrier frequency generated by a carrier oscillator 109 and transmitted from a transmission antenna 110.

A reception antenna 111 receives the electromagnetic wave signals transmitted from the transmission antenna 110. After the electromagnetic wave signals have been amplified by a pre-amp 112, interfering waves of an unwanted band are removed by a band pass filter 113 and the electromagnetic wave signals are inputted to a synchronous circuit 114. The synchronous circuit 114 detects the preamble in the reception signal packet and generates, in cooperation with a PLL 115, a synchronous timing and clock necessary for demodulation. A demodulator 116 receives the reception signals and demodulates the packet using the outputs of the synchronous circuit 114 and the PLL 115. A logic circuit 118 matches the timing to display data 122 within the packet from the demodulated packet, generates a horizontal synchronizing signal 123, a vertical synchronizing signal 124 and a transfer clock 125 of an X driver, outputs, to a liquid crystal display 126, these as signals corresponding to the display data signal 716, the horizontal synchronizing signal 714, the vertical synchronizing signal 718 and the X clock signal 715 of FIG. 15 of the conventional example, i.e., the driver of the liquid crystal display.

The oscillation frequency of the carrier oscillator 109 selects a frequency that does not hinder, or is hindered by, the original purpose of an electronic device using radio waves, as in a radio receiver or a mobile telephone. If a frequency of 2 GHz or higher is selected as the oscillation frequency of the carrier oscillator 109, the exclusive band is about 200 MHz even when the data is transmitted at 100 Mbps, and in most cases use is ordinarily possible without problem.

By adopting the above-described configuration, unwiring of display data 122 to a liquid crystal display 126 can be realized, and various problems arising due to wired transmission that have become more apparent in accompaniment with enlargement of the liquid crystal display 126, such as increased power consumption, restriction of wiring positions, EMI measures and reliability securement, can be eliminated.

### [Embodiment 6]

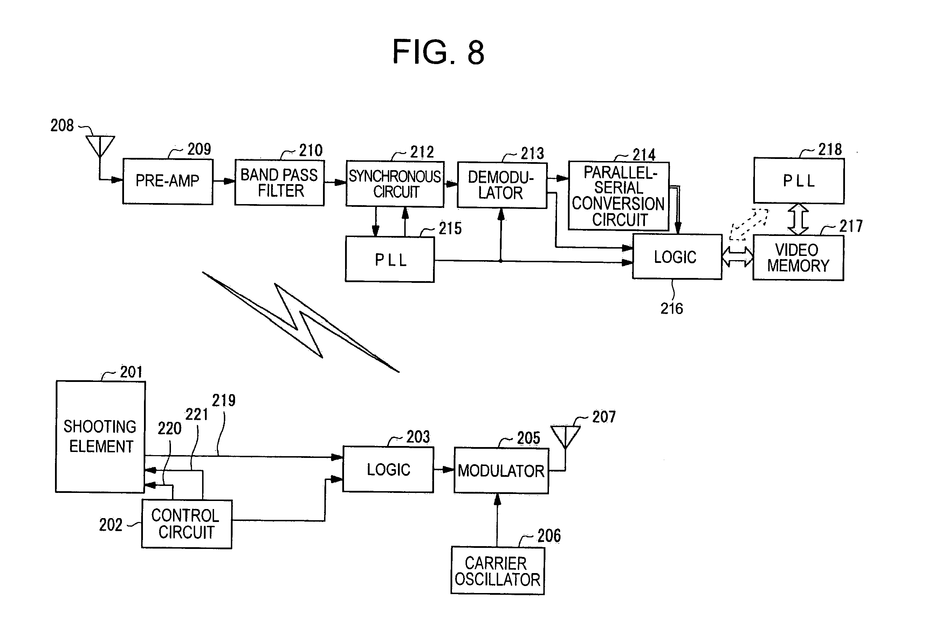

FIG. 8 is a block diagram showing the relevant portions of an embodiment of another electronic device.

An image shooting element 201 is started up by a horizontal synchronizing signal 220 and a vertical synchronizing signal 221 generated by a control circuit 202, and outputs shot image data 219. A logic circuit 203 receives these signals and constructs a packet for wireless transmission. A carrier wave generated by a carrier oscillator 206 is modulated by a modulator 205, and the packet is emitted as electromagnetic waves from a transmission antenna 207.

The electromagnetic wave signals transmitted from the transmission antenna 207 are received by a reception antenna 208, amplified by a pre-amp 209, unwanted out-of-band signals are removed by a band pass filter 210, and the electromagnetic signals are inputted to a synchronous circuit 212. The synchronous circuit 212 generates, in cooperation with a PLL 215, a synchronous timing and clock necessary for demodulation from the reception signal packet. A demodulator 213 receives the reception signals and demodulates the reception signals using the outputs of the synchronous circuit 212 and the PLL 215. A serial-parallel conversion circuit 214 extracts the image data portion from the demodulated reception packet, conducts parallel-serial conversion per pixel, and generates pixel data. A logic circuit 216 generates a memory address to be written to a video memory 217 to match the demodulated pixel data, and writes the image data, either directly or via a CPU 218, to the video memory 217. The CPU 218 accesses the video memory 217 and uses the image data in various applications. Ordinarily, the CPU 218 conducts control such as startup of the image shooting element 201, but the method of transmitting information relating to the startup to the control circuit 202 of the image shooting element 201 may be done with a wire because the bit rate is low. When the signals are transmitted wirelessly, two-way communication is conducted by both the CPU 218 and the image shooting element 201 using transmitting/receiving means. Particularly with a clamshell structure mobile telephone, there are many instances where the image shooting element 201 and the display element are disposed in proximity to each other and the display element 201 and display element are disposed in the opposite side from the CPU 218, and after shot image data are sent to the CPU 218 and processed, the data are sent back to the display element. In such a case, realization is possible by using the CPU 101 of FIG. 7 and the CPU 218 of FIG. 8 and adopting a configuration where the configuration of embodiment 5 and embodiment 6 are placed back-to-back.

By adopting the above-described configuration, i.e., by unwiring data transmission from the image shooting element 201, various problems arising due to wired transmission that have become more apparent in accompaniment with enlargement of the image shooting element 201, such as increased power consumption, restriction of wiring positions, EMI measures and reliability securement, can be eliminated.

### [Embodiment 7]

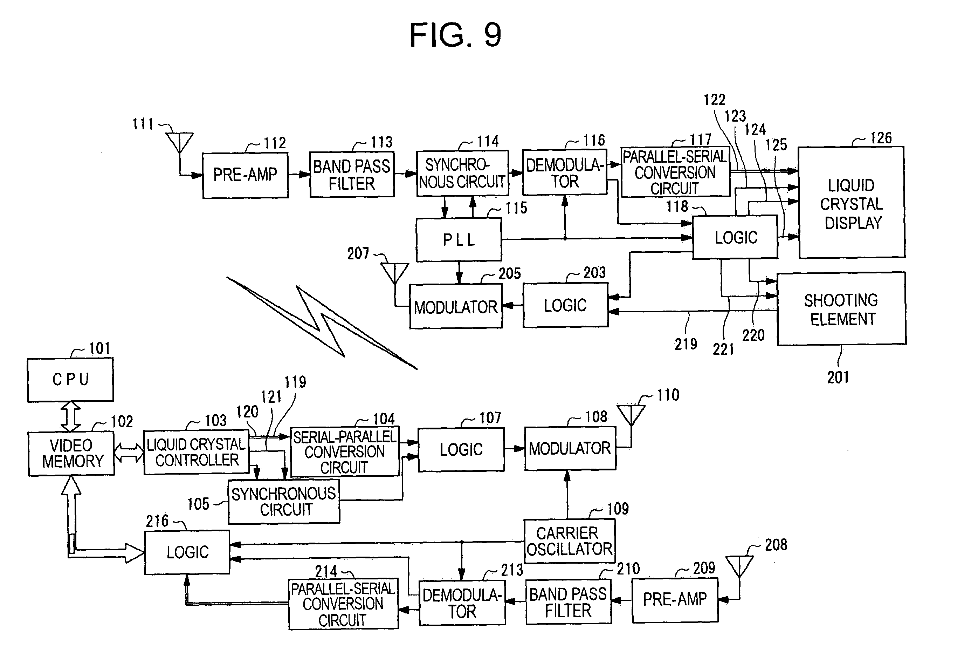

FIG. 9 is a block diagram showing the relevant portions of yet another embodiment pertaining to the invention. The present embodiment is an instance where there is also an image shooting element 201 near a liquid crystal display 126, and takes a form where embodiment 5 and embodiment 6 are synthesized back-to-back. Constituent elements with the same numbers as the numbers described in FIGS. 7 and 8 are the same as those described in embodiment 5 and embodiment 6, and will be omitted.

In FIG. 9, the modulator 108 modulates the display data stored in the video memory 102 and converts the data to electromagnetic signals, the electromagnetic signals are transmitted by the transmission antenna 110, the reception antenna 111 receives the electromagnetic signals from the transmission antenna 110, and the electromagnetic signals are demodulated by the demodulator 116 and displayed on the liquid crystal display 126.

Also, the image shooting element 201 is disposed near the liquid crystal display 126, the shot data obtained by the image shooting element 201 are modulated by the modulator 205 and converted to electromagnetic signals, and the electromagnetic signals are transmitted from the transmission antenna 207. The electromagnetic signals transmitted from the transmission antenna 207 are received by the reception antenna 208, demodulated by the demodulator 213, and accumulated in the video memory 102. The CPU 101 conducts control such as writing the shot data to a predetermined address in the video memory 102 in order to cause the shot data to be displayed on the liquid crystal display 126.

Sharing of the transmission antenna 111 and the reception antenna 207 or the transmission antenna 110 and the reception antenna 208 is possible. In this case, they are connected to a transmission/reception circuit via an antenna switch or duplexer.

When the structure of FIG. 8 is compared with FIG. 9, in the structure of Fig. 9, the modulator 205 obtains a carrier wave clock signal from the PLL 115. On the other hand, in FIG. 8, the carrier wave clock signal is obtained from the oscillator 206. Conversely, at the reception side, in the structure of FIG. 9, the clock of the demodulator 213 is obtained from the carrier oscillator 109, and the position of the carrier oscillator 109 is opposite from the PLL 115 in transmission and reception.

Because the PLL 115 is already synchronized by the display-use transmission/reception system, such a structure becomes possible. Namely, in one-directional communication, there is no other method but to synchronize to the signal transmitted at the reception side, but with transmission/reception two directions, synchronization can be taken at the transmission side to match the timing of the reception side as in the present embodiment. Thus, in the case of conducting two-directional communication of FIG. 9 in this manner, the synchronous circuit 212 of FIG. 8 can be omitted at the reception side, and the circuit is simplified.

As described above, by conducting two-directional communication within the same casing, it becomes possible to send data to the liquid crystal display 126 or transmit and receive signals from the image shooting element 201 disposed near the liquid crystal display 126, and with the circuit also, common portions can be shared and simplification becomes possible.

### [Embodiment 8]

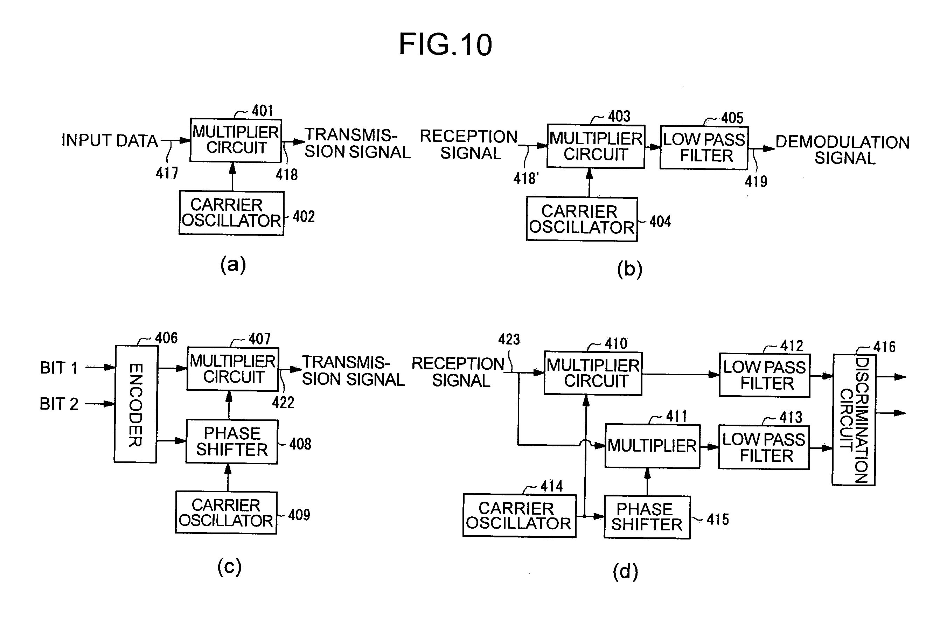

FIG. 10(a) is a block diagram showing the relevant portions of an embodiment of another electronic device, and is a diagram showing in more detail the modulators 108 and 205 of embodiment 5, embodiment 6 or embodiment 7.

In FIG. 10(a), a carrier oscillator 402 is a short pulse oscillator corresponding to the carrier oscillators 109 and 206 of embodiment 5 or embodiment 6. A multiplier circuit 401 multiplies input data 417 with clock signal 431 outputted from the carrier oscillator 402, outputs this as a transmission signal 418 and sends the transmission signal to a transmission antenna. Here, because the input data 417 and the clock signal 431 from the carrier oscillator 402 are both digital signals, the multiplier circuit 401 may be an exclusive OR circuit. When an analog value of the value "1" is corresponded in the case of the logic "0" and the analog value of the value "-1" is corresponded in the case of the logic "1", the input/output of the exclusive OR circuit operates as a multiplier circuit 401. Also, because the transmission distance of communication is extremely close and harmonic interference applied other devices is originally kept low, a filter is unnecessary between the antenna and the modulator output.

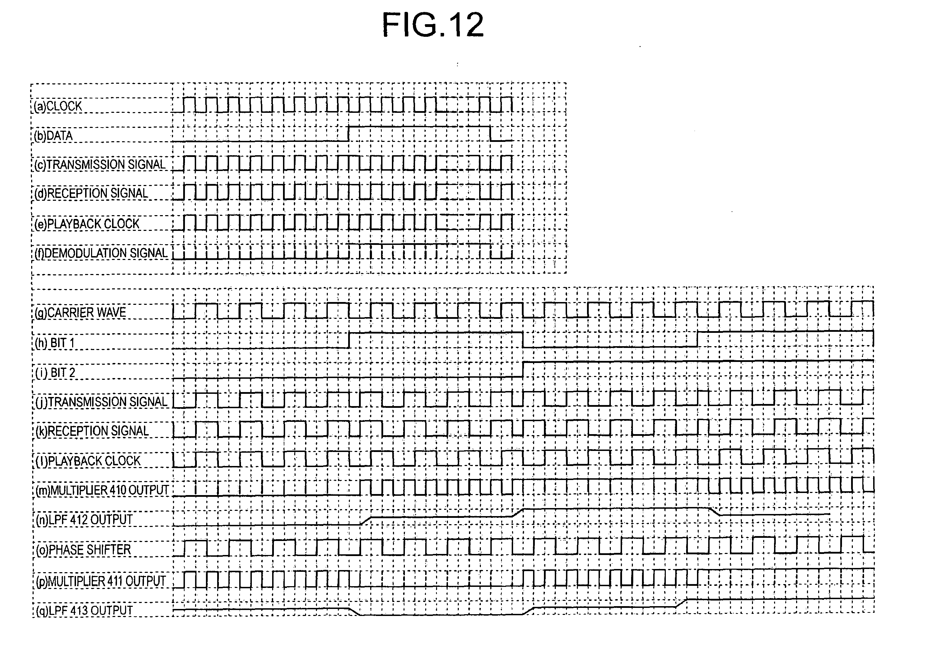

FIGS. 12(a) to (c) show time diagrams of the modulator resulting from embodiment 8. Namely, FIG. 12 (a) is the clock signal 431 generated by the carrier oscillator 402, FIG. 12(b) is the input data 417 inputted to the multiplier circuit 401, and FIG. 12 (c) is the transmission signal 418 outputted from the multiplier circuit 401. By considering the time diagrams of the same diagrams as digital circuits, the modulator is exclusive OR, and by considering them as an analog value taking the value of +-1, the modulator is a multiplier circuit 401. According to the above-described configuration, it becomes possible to realize modulation with one exclusive OR circuit, and modulation can be realized extremely easily.

### [Embodiment 9]

FIG. 10(b) is a block diagram showing the relevant portions of an embodiment of another electronic device, and is a diagram showing in more detail the demodulators 116 and 213 of embodiment 5, embodiment 6 or embodiment 7.

In FIG. 10(b), a carrier oscillator 404 is a short pulse oscillator corresponding to the outputs of the PLL 115 and 215 of embodiment 5 or embodiment 6. A multiplier circuit 403 multiplies a pulse train 432 and a reception signal 418' with oscillation signals outputted from the carrier oscillator 404, and sends this to a low pass filter 405. The low pass filter 405 removes the high pass frequency component (narrow pulse component generated by a slight phase difference between the reception signal 418' and the oscillation waveform of the oscillator 404) of the output from the multiplier circuit 403, and outputs as a demodulation signal 419.

FIGS. 12(d) to (f) show time diagrams of the demodulation circuit resulting from embodiment 9. Namely, FIG. 12(d) is the reception signal 418' inputted to the multiplier circuit 403, FIG. 12(e) is the pulse train 432 generated from the carrier oscillator 404, and FIG. 12(f) is the demodulation signal 419 outputted to the low pass filter 405.

By considering the time diagrams of the same diagrams as digital circuits, the modulator is exclusive OR, and by considering them as an analog value taking the value of +-1, the modulator is a multiplier circuit 403. As for the wireless signal transmission used in the present invention, because the message distance is a close distance and communication quality with a good SN ratio can be sufficiently ensured, the signals can be amplified to the extent that they can be regarded as digital signals. In this case, the amplified signal level becomes large as far as a logical value level, but because the load driven by this logical value is a low load extremely short within the same semiconductor chip and not a long distance carrying a large stray capacitance from the CPU 101 of FIG. 9 to the liquid crystal display 126, there is no increase in power consumption.

Also, even if the reception signal 418' is an analog level not amplified as far as a logical value level, the multiplication can be realized with a simple switch circuit because the pulse train 432 from the oscillator 404 is short (taking the value of +-1). Namely, this can be realized by preparing two amplifiers where the absolute values of the amplification degrees of reception signal 418' are equal and where the polarities are opposite, the inverted amplifier output is selected by a switch when the pulse train 432 from the oscillator 404 is the logical level "1" and the normal amplifier output is selected when the output from the carrier oscillator 404 is the logical level "0". A multiplier of such a configuration may be used as the multiplier circuit 403. According to the above-described configuration, the demodulator also can be realized extremely easily with one exclusive OR circuit or amplifiers having positive/negative amplification degrees and a switch circuit and a low pass filter.

### [Embodiment 10]

FIG. 10(c) is a block diagram showing the relevant portions of an embodiment of another electronic device, and is a diagram showing in more detail another embodiment of the modulators 108 and 205 of embodiment 5, embodiment 6 or embodiment 7. In embodiment 8 and embodiment 9, simplified BPSK modulation has been was described as an example, but in embodiment 10, an example based on QPSK will be given in order to illustrate a case using more common phase modulation.

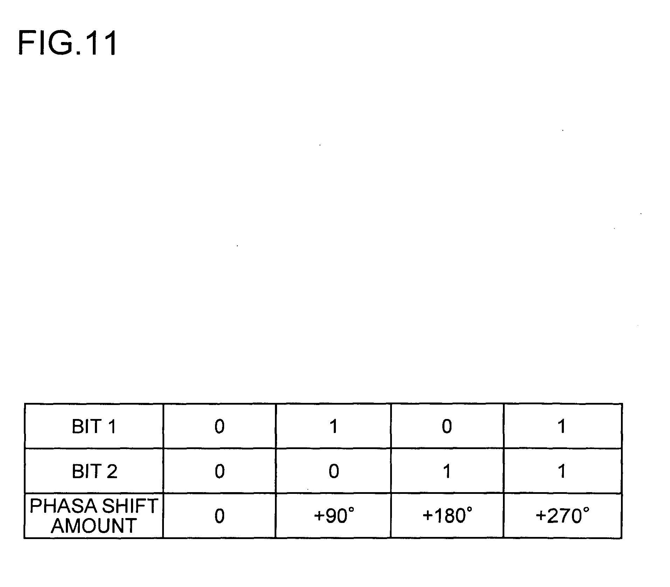

In FIG. 10(c), a carrier oscillator 409 is a short pulse oscillator corresponding to the carrier oscillators 109 and 206 of embodiment 5 or embodiment 6. In QPSK, 2 bits (i.e., data bit "1" and data bit "2") are allocated to each symbol, encoded and transmitted. Namely, as shown in FIG. 11, phase shift amounts are encoded with respect to a reference block, modulated and transmitted. An encoder 406 controls a phase shifter 408 and a multiplier circuit 407 to become the phase shifts shown in FIG. 11 by bit patterns of data bit "1" and data bit "2".

FIGS. 12(g) to (j) are time diagrams showing the operation of each portion of the modulator shown in FIG. 10(c). The data bit "1" and the data bit "2" of the transmission data are encoded by the encoder 406, and the oscillator controls to determine whether or not to conduct phase shifting of 90° with the phase shifter 408 with respect to the carrier wave 433 oscillated by the carrier oscillator 409, and controls to determine whether or not to conduct inversion (phase shifting of 180°) of the carrier wave 443 with the multiplier circuit 407, and then finally outputs a QPSK-modulated transmission signal 422.

FIG. 10 show examples of demodulators corresponding to QPSK modulation. Also, FIGS. 12(k) to (q) show time diagrams of each portion.

In FIG. 10, the carrier oscillator 414 is a short pulse oscillator corresponding to the outputs of the PLL 115 and PLL 215 of embodiment 5 or embodiment 6. The output waveform from the carrier oscillator 414 is shown in FIG. 12(g). The clock pulse train 434 of the carrier oscillator 414 is multiplied with a reception signal 423 (FIG. 12(k)) by a first multiplier 410, transmitted to a first low pass filter 412, the high pass component is removed, and then the signal is transmitted to a discrimination circuit 416. At the same time, as for the reception signal 423, the clock pulse train 434 generated by the oscillator 414 is multiplied, by a second multiplier circuit 411, with the pulse train (FIG. 12(o)) phase-shifted 90° by a 90°phase shifter 415, the high pass. component is removed by a second low pass filter 413, and the signal is transmitted to the discrimination circuit 416. The discrimination circuit 416 determines the transmission data from the outputs of the first and second low pass filters 412 and 413, and demodulates the reception signal.

According to the above-described configuration, the speed of data transfer is increased without increasing the exclusive band of the transmission signal 422. Also, because the modulators/demodulators can both be realized with simply digital circuits, they can be incorporated in a semiconductor chip, and increases in cost and power consumption can be ignored.

### [Embodiment 11]

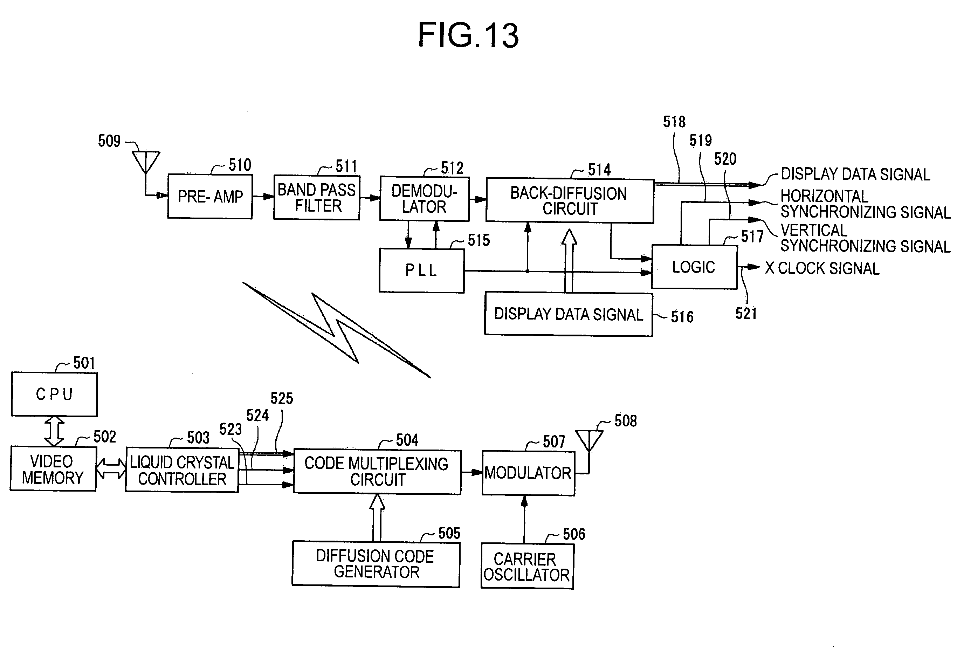

FIG. 13 is a block diagram showing the relevant portions of an embodiment of another electronic device.

In FIG. 13, the functions of a CPU 501, a video memory 502 and a liquid crystal controller 503 are the same as those described in embodiment 5, and display data 525, a horizontal synchronizing signal 523 and a vertical synchronizing signal 524 generated by the liquid crystal controller 503 are multiplexed, by a code multiplexer circuit 504, with a diffusion code generated by a diffusion code generator 505. In the present embodiment 11, serial conversion by the serial-parallel conversion circuit 104 of embodiment 5 is unnecessary. There are many instances where mutually orthogonal code sets are used as the diffusion code. Because the display data 525 are collectively read out per pixel from the video memory 502, they are outputted as parallel digital data.

In the code multiplexer circuit 504, each bit of the data signal is multiplied (taking exclusive OR) by each code generated by the diffusion code generator 505, analog-added, and code multiplexing is conducted. The multiplexed signal is modulated by a modulator 507 by a carrier wave generated by a carrier wave transmitter 506, and transmitted from a transmission antenna 508 as electromagnetic wave signals.

The electromagnetic wave signal transmitted from the transmission antenna 508 is received by a reception antenna 509, amplified by a pre-amp 510, and demodulated by a demodulator 512 after unwanted signals other than a predetermined band are removed by a band pass filter 511. A PLL 515 cooperates with the demodulator 512 to detect a timing generation for synchronous detection and the timing for back diffusion. The signal demodulated by the demodulator 512 is multiplied, by a back diffusion circuit 514, with a diffusion code for multiplexing generated by a diffusion code generator 516, and the multiplexed data are separated. A logic circuit 517 generates a display data signal 518, a horizontal synchronizing signal 519, a vertical synchronizing signal 520 and an X clock signal 521 of an X driver for driving a liquid crystal driver from the detected display data and various timings, and sends the signals to a liquid crystal display, where display is conducted.

According to the above-described embodiment, the signal is multiplexed and transmitted/received without conducting serial conversion of the data, and there is the effect that this is identical to pulling several bus lines in parallel. In particular, there are few restrictions of multiplex on multiplexing by orthogonal codes, and physical space is not required like with bus lines. Also, a plurality of transmission units and reception units are disposed so that simultaneous communication at several different places for which the transmission and reception of signal are necessary is possible. Also, it is possible to accumulate diffusion gains by diffusion, and particularly in a device that generates radio waves such as a mobile telephone, there are also effects in improving interference-resisting and interference-giving characteristics with radio waves serving as the original purpose.

### [Embodiment 12]

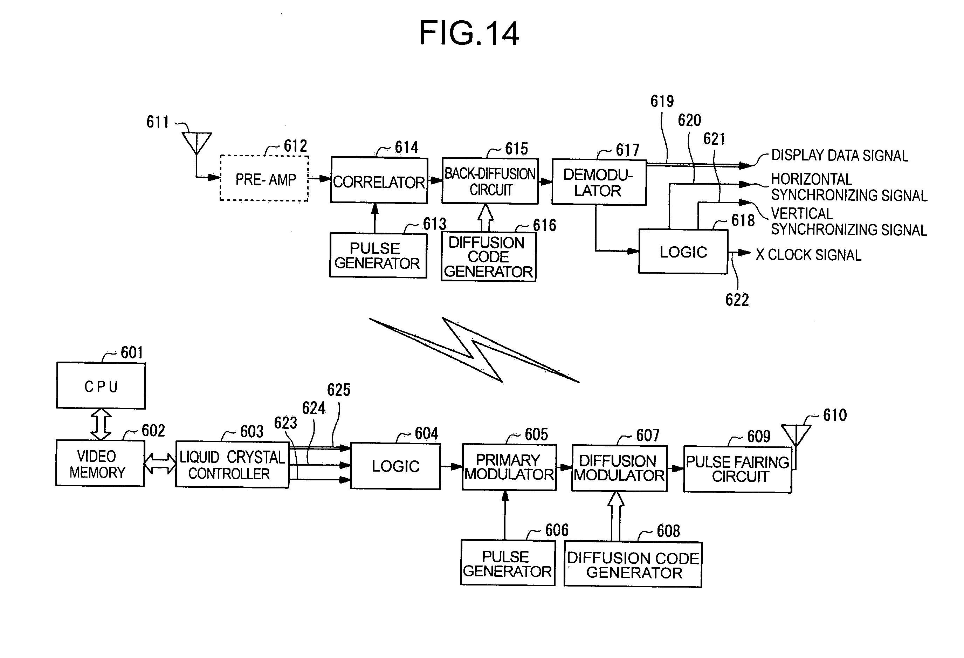

FIG. 14 is a block diagram is a block diagram showing the relevant portions of an embodiment of another electronic device.

In FIG. 14, the functions of a CPU 601, a video memory 602 and a liquid crystal controller 603 are the same as those described in embodiment 5. As for display data 625, a horizontal synchronizing signal 623 and a vertical synchronizing signal 624 generated by the liquid crystal controller 603, parallel-serial conversion and data sorting such as preamble attribution packet construction are conducted in the logic circuit 604, and the signals are converted to serial signals. A primary modulator 605 modulates the pulse train generated by a pulse generator 606 to the serial signal. For the primary modulation, pulse position modulation or biphasic pulse modulation can be used with respect to the pulse train. The serial signal that underwent primary modulation is diffusion-modulated by a diffusion modulator 607 by a diffusion code generated by a diffusion code generator 608. After the diffusion-modulated pulse train undergoes waveform fairing to a pulse of an extremely short time to become a low broadband pulse of a spectral density by a pulse fairing circuit 609, it is emitted as electromagnetic waves by a transmission antenna 610.

The electromagnetic field that is emitted is not one where modulation has been given to sine waves, but it is an extremely narrow pulse train. Communication using a broadband pulse with a short pulse in this manner is called the Impulse Radio or UWB (Ultra Wide Band) communication format. After the emitted electromagnetic waves are received by a reception antenna 611 and amplified by a pre-amp 612, the correlation with a pulse template generated by a pulse generator 613 is calculated by a correlator 614. After the output of the correlator 614 is back-diffused by a back diffusion circuit 615 by a diffusion code generated by a diffusion code generator 616, it is demodulated by a demodulator 617 and converted to a signal prior to primary modulation (the input of the primary modulator 605). A logic circuit 622 generates a display data signal 619, a horizontal synchronizing signal 620, a vertical synchronizing signal 621 and an X clock signal 622 of an X driver for driving a liquid crystal driver from the display data detected by the demodulator 617 and various timings, and sends the signals to a liquid crystal display, where display is conducted.

Here, the essence of UWB communication lies in using a short pulse of an extremely low spectral density. When UWB is used, the legal upper limit of radiation energy is allowed to about the unwanted radiation level stipulated by EMI, which is far more lax (about 20 dB) than the upper limit of radio stations not requiring a license. For this reason, even in an electronic device that internally generates strong radio waves that is its original purpose, such as a mobile telephone, the setting of a link budget that can ensure sufficient communication quality becomes easy. As for the pulse used, because the pulse width can be narrowed and the wave height value can be set high, it is possible to omit the pre-amp 612.

According to the above-described embodiment, the modulation operation is conducted only on a time axis, most of the constituent elements can be realized with simple digital circuits handling pulses, and making circuit elements IC-compatible becomes easy. Diffusion gains in the time direction are accumulated by adopting short pulses, and not only are interference-resisting and interference-giving characteristics with radio waves emitted as the original function of an electronic device improved, but multichannelization as a communication transmission path can be improved.

In the above-described embodiment, wireless communication within the same casing or the same device was described as an example, but "within the same casing" here includes instances where individual casings are coupled together via a coupler. Also, other than within the same casing, the invention may be applied to instances where wireless communication is conducted within the same package.

### Industrial Applicability

The invention is not limited to the preceding embodiments and can applied with wide versatility, such as connecting a CPU and a recording device of a hard disk drive housed in an electronic device.

## Claims

1. An electronic device where a first portion, which is disposed with an electromagnetic wave conversion unit that converts a transmission signal to an electromagnetic wave signal and a transmission unit that wirelessly transmits the electromagnetic wave signal; and a second portion, which is disposed with a reception unit that receives the electromagnetic wave signal and an electromagnetic wave restoration unit that restores the received electromagnetic wave signal to the transmission signal, are housed in the same casing.

2. An electronic device comprising:
a first casing unit in which is housed a first portion in which are disposed an electromagnetic wave conversion unit that converts a transmission signal to an electromagnetic wave signal and a transmission unit that wirelessly transmits the electromagnetic wave signal;
a second casing unit in which is housed a second portion in which are disposed a reception unit that receives the electromagnetic wave signal and an electromagnetic wave restoration unit that restores the received electromagnetic wave signal to the transmission signal; and
a coupler unit that couples together the first casing unit and the second casing unit so that the positional relationship between the first casing unit and the second casing unit can be changed.

3. The electronic device according to Claim 1 or 2, wherein the electromagnetic wave conversion unit comprises at least a carrier wave generation unit that generates a carrier wave pulse train and a multiplier circuit that multiplies the carrier wave pulse train with the transmission signal.

4. The electronic device according to Claim 3, wherein the electromagnetic wave restoration unit comprises at least a multiplier circuit that multiplies the carrier wave pulse train with the received electromagnetic wave signal to restore the transmission signal.

5. The electronic device according to Claim 1 or 2, wherein the electromagnetic wave conversion unit is disposed with at least a carrier wave generation unit that generates a carrier wave pulse train and a modulation unit that phase-modulates, with the transmission signal, the carrier wave generated by the carrier wave generation unit.

6. The electronic device according to Claim 5, wherein the electromagnetic wave restoration unit comprises at least a multiplier circuit that multiplies the carrier wave pulse train with the received electromagnetic wave signal to restore the transmission signal.

7. The electronic device according to Claim 1 or 2, wherein the electromagnetic wave conversion unit is disposed with a diffusion modulation unit that code-multiplexes and diffusion-modulates the transmission signal.

8. The electronic device according to Claim 1 or 2, wherein the electromagnetic wave conversion unit is disposed with a UWB modulation unit that UWB-modulates the transmission signal.

9. The electronic device according to any of Claims 1, 2, 3, 5, 7 and 8, wherein the first portion is disposed with a storage unit that stores the transmission signal and a control unit that reads and outputs the transmission signal stored in the storage unit,
the second portion is disposed with a display unit, and
the display unit displays the transmission signal read and outputted by the control unit.

10. The electronic device according to any of Claims 1, 2, 3, 5, 7 and 8, wherein the first portion is disposed with an image shooting element, and image data shot by the image shooting element are included in the transmission signal.

11. A wireless communication terminal comprising:
a first casing unit;
a second casing unit coupled to the first casing unit;
a coupler portion that couples together the first casing unit and the second casing unit so that the position relation between the first casing unit and the second casing unit can be changed;
an external wireless communication-use antenna disposed at the first casing unit or the second casing unit;
an external wireless communication control unit that is disposed in the first casing unit and mainly controls external wireless communication conducted via the external wireless communication-use antenna;
a display unit disposed in the second casing unit;
a first internal wireless communication-use antenna disposed at the first casing unit;
a second internal wireless communication-use antenna disposed at the second casing unit;
a first internal wireless communication control unit that is disposed in the first casing unit and controls internal wireless communication conducted via the first internal wireless communication-use antenna; and
a second internal wireless communication control unit that is disposed in the second casing unit and controls internal wireless communication conducted via the second internal wireless communication-use antenna.

## Amended claims

### Amended claims under Art. 19.1 PCT

**1.** An electronic device comprising:
a control unit for controlling actuations of the device;
a peripheral unit operating by controlling the control unit;
an electromagnetic wave conversion unit for converting a transmission signal to an electromagnetic wave signal;
a transmission unit for wirelessly transmitting the electromagnetic wave signal converted by the electromagnetic wave conversion unit;
a reception unit for receiving the electromagnetic wave signal transmitted by the transmission unit;
an electromagnetic wave restoration unit for restoring the electromagnetic wave signal received by the reception unit to the transmission signal;
a casing unit of one body for housing the control unit and the peripheral unit; and
a man-machine interface unit for a man to input or output data from the outside of the casing unit with respect to the control unit and/or the peripheral unit;
wherein, in a communication path between the control units, the communication path between the control unit and the peripheral unit and the communication path between the peripheral units, all or portions of the respective communication paths include the electromagnetic wave conversion unit, the transmission unit, the reception unit and the electromagnetic wave restoration unit.

**2.** An electronic device comprising:
a control unit for controlling actuations of the device;
a peripheral unit operating by controlling the control unit;
an electromagnetic wave conversion unit for converting a transmission signal to an electromagnetic wave signal;
a transmission unit for wirelessly transmitting the electromagnetic wave signal converted by the electromagnetic wave conversion unit;
a reception unit for receiving the electromagnetic wave signal transmitted by the transmission unit;
an electromagnetic wave restoration unit for restoring the electromagnetic wave signal received by the reception unit to the transmission signal;
a man-machine interface unit for a man to input or output data with respect to the control unit and/or the peripheral unit;
a first casing unit for housing the electromagnetic wave conversion unit and the transmission unit;
a second casing unit for housing the reception unit and the electromagnetic wave restoration unit; and
a coupler unit for coupling together the first casing unit and the second casing unit so that the positional relation between the first casing unit and the second casing unit is changed;
wherein the control unit, the peripheral unit and the man-machine interface house the respective one portions in the first casing unit, and house the respective remaining portions in the second casing unit.

**3.** The electronic device of claim 1 or 2, wherein the electromagnetic wave conversion unit is disposed with a carrier wave generation unit that generates a carrier wave signal of a determined period and width and a multiplier circuit that multiplies the transmission signal with the carrier wave signal.

**4.** The electronic device of claim 3, wherein the electromagnetic wave restoration unit is disposed with the multiplier circuit that multiplies the electromagnetic wave signal received by the reception unit with the carrier wave signal to restore to the transmission signal.

**5.** The electronic device of claim 1 or 2, wherein the electromagnetic wave conversion unit is disposed with the carrier wave generation unit that generates a carrier wave pulse train and a modulation unit that phase-modulates, with the transmission signal, the carrier wave generated by the carrier wave generation unit.

**6.** The electronic device of claim of 5, wherein the electromagnetic wave restoration unit is disposed with the multiplier circuit that multiplies the received electromagnetic wave signal with the carrier wave pulse train to restore to the transmission signal.

**7.** The electronic device of claim 1 or 2, wherein the electromagnetic wave conversion unit is disposed with a diffusion modulation unit that code-multiplexes and diffusion- modulates the transmission signal.

**8.** The electronic device of claim 1 or 2, wherein the electromagnetic wave conversion unit is disposed with a UWB modulation unit that UWB-modulates the transmission signal.

**9.** The electronic device of any of claims 1, 2, 3, 5, 7 and 8, wherein the first portion is disposed with a storage unit that stores the transmission signal and a control unit that reads and outputs the transmission signal stored in the storage unit, the second portion is disposed with a display unit, and the display unit displays the transmission signal read and outputted by the control unit.

**10.** The electronic device of any of claims 1, 2, 3, 5, 7 and 8, wherein the first portion is disposed with a shooting element, and image data shot by the shooting element are included in the transmission signal.

**11.** A wireless communication terminal comprising:
a first casing unit;
a second casing unit coupled to the first casing unit;
a coupler portion that couples together the first casing unit and the second casing unit so that the positional relation between the first casing unit and the second casing unit is changed;
an external wireless communication-use antenna disposed at the first casing unit or the second casing unit;
an external wireless communication control unit that is disposed in the first casing unit and mainly controls external wireless communication conducted via the external wireless communication-use antenna;
a display unit disposed in the second casing unit;
a first internal wireless communication-use antenna disposed at the first casing unit;
a second internal wireless communication-use antenna disposed at the second casing unit;
a first internal wireless communication control unit that is disposed in the first casing unit and controls internal wireless communication conducted via the first internal wireless communication-use antenna; and
a second internal wireless communication control unit that is disposed in the second casing unit and controls internal wireless communication conducted via the second internal wireless communication-use antenna.
